# FASCICULE DE BREVET EUROPEEN

(11) **EP 2 532 400 B1**
(45) Date de publication et mention de la délivrance du brevet: **26.02.2014**
(21) Numéro de dépôt: 11168981.6
(22) Date de dépôt: 07.06.2011
(51) Int. Cl.: A63K 3/02

(54) **Dispositif de départ pour un concurrent d'une compétition sportive**
Startvorrichtung für einen Wettkämpfer, der an einem Sportwettkampf teilnimmt
Starting device for a competitor in a sports competition

(43) Date de publication de la demande: 12.12.2012
(73) Titulaire: Swiss Timing Ltd., 2606 Corgémont (CH)
(72) Inventeur: Zanetta, André, 2075 Wavre (CH); Grimm, Cédric, 2504 Bienne (CH); Galli, Reto, 3053 Münchenbuchsee (CH)
(74) Mandataire: Giraud, Eric

(56) Documents cités:
- WO-A2-99/32889
- US-A- 3 724 843
- US-A- 5 467 652

## Description

L'invention concerne un dispositif de départ pour un concurrent d'une compétition sportive. Le dispositif comprend au moins une base pour maintenir fixe le dispositif sur une surface de compétition, un capteur de détection relié à un circuit électronique de traitement, et un plot d'appui pour au moins un pied. Ce plot d'appui est relié à la base et permet d'activer le capteur de détection pour déterminer un temps de réaction du compétiteur au moment du départ de la compétition.

L'invention concerne également un procédé de mise en action du dispositif de départ pour la mesure d'un temps de réaction du compétiteur au moment du départ de la compétition sportive.

Il est à noter qu'on entend par dispositif de départ aussi bien un dispositif de starting-block dans le domaine de l'athlétisme, qu'une plateforme de départ pour la natation ou un autre domaine sportif. Ce dispositif de départ doit permettre de déterminer un temps de réaction du compétiteur notamment suite au signalement du départ de la compétition et également signaler tout faux départ.

Actuellement un dispositif de départ, tel qu'un dispositif de starting-block, peut comprendre sur la structure de base un moyen de détection pour déterminer un temps de réaction au départ d'un concurrent d'une course d'athlétisme. Ce moyen de détection est généralement constitué d'un capteur placé par exemple sur un plot d'appui d'un pied du coureur. Ce capteur peut être un simple interrupteur électrique, qui est fermé par une force suffisante appliquée sur le plot lors de la poussée de départ du concurrent, et qui est supérieure à un seuil déterminé. Cela implique un déplacement gênant vers l'arrière du plot, qui n'est également pas unidirectionnel. De plus, le capteur doit être réglé en fonction du type de course et des concurrents y participant. Un concurrent peut également appliquer une force constante et suffisante sur le plot susceptible de fermer l'interrupteur du capteur en s'installant avant le départ. Cela empêche d'effectuer une mesure précise du temps de réaction au moment du signalement du départ de la course. Cela constitue plusieurs inconvénients d'un tel dispositif de starting-block.

Le brevet US 5,467,652 décrit un dispositif de starting-block pour une course d'athlétisme. Ce dispositif de starting-block comprend une barre longitudinale d'ancrage au sol, sur laquelle sont placés un premier plot d'appui d'un pied et un second plot d'appui d'un pied respectivement de chaque côté de la barre. Les plots peuvent être déplacés sur la longueur de la barre tout en étant guidés dans des rainures latérales de la barre et ajustés par des goupilles insérées dans un des trous prévus de la barre. Chaque plot comprend une surface d'appui d'un pied, qui est ajustable angulairement et revêtue d'un tampon de pression à élastomère conducteur. Ces tampons de pression sont reliés à un module de commande et d'affichage par des câbles électriques. Les capteurs des tampons de pression sont connectés à des amplificateurs, qui fournissent des signaux analogiques de sortie, qui varient en fonction de la pression mesurée. Lors d'un signal de départ d'une course, le dispositif de starting-block est capable de mesurer, d'enregistrer et d'afficher les niveaux de pression détectés sur chaque surface d'appui. Il permet également de déterminer le temps écoulé entre le signal de départ et le départ du coureur sur la base de la variation de pression mesurée sur les plots pour signaler tout faux départ. Cependant l'action d'un pied d'un coureur contre un des tampons à capteur ne se fait pas dans une seule direction. Cela peut conduire à une imprécision de la mesure du temps de départ, ce qui constitue un inconvénient. De plus, rien n'est prévu pour pallier à tout mauvais fonctionnement de chaque capteur.

Dans la demande de brevet WO 99/32889, il est décrit un système de mesure du temps de réaction lors d'un départ d'un coureur depuis un dispositif de starting-block fixé au sol. La mesure du temps de départ est obtenue par l'intermédiaire d'un accéléromètre disposé sur au moins un plot de départ du dispositif de starting-block. L'accéléromètre est monté sur le plot de départ par l'intermédiaire d'un couplage rigide. Une courbe de l'accélération mesurée au cours du temps au moment du départ d'une course peut être établie et affichée sur un écran d'affichage. Comme pour le document précédent, rien n'est prévu pour garantir un déplacement unidirectionnel du plot pour effectuer une mesure précise du temps de départ. De plus intrinsèquement, l'utilisation d'un accéléromètre ne permet pas d'obtenir une mesure précise du temps de départ lors de la poussée de départ du concurrent, ce qui constitue un inconvénient.

Le document US-A1-3724843 divulgue toutes les caractéristiques techniques du préambule de la revendication 1.

L'invention a donc pour but de pallier aux inconvénients de l'état de la technique susmentionné en proposant un dispositif de départ capable de signaler précisément le départ de n'importe quel concurrent d'une compétition sportive indépendamment de la valeur de la force appliquée sur le dispositif au moment du départ.

A cet effet, l'invention concerne un dispositif de départ pour une compétition sportive comprenant les caractéristiques définies dans la revendication indépendante 1.

Des formes d'exécution particulières du dispositif de starting-block sont définies dans les revendications dépendantes 2 à 17.

Un avantage du dispositif de départ réside dans le fait que la barre centrale de la structure en forme de H permet d'activer le capteur de détection, tel qu'un capteur de force par un mouvement dans une seule direction, qui est la direction préférentielle souhaitée. Grâce aux deux lames notamment métalliques de la structure en forme de H, dont les extrémités sont rigidement maintenues fixes, la barre centrale ne peut être poussée par flexion des lames, que dans une direction en fonction du niveau de force appliquée sur le plot d'appui. Dans ces conditions, une mesure du temps de réaction peut être précisément effectuée, si le capteur de détection est bien calibré au moment du départ de la compétition sportive. Le capteur de détection est ainsi relié à un circuit électronique de traitement pour ne prendre en compte qu'une variation de la force appliquée sur le plot d'appui du dispositif notamment suite au signalement du départ fourni par exemple par un pistolet électronique. Cela ne dépend plus de la valeur de la force appliquée sur le plot d'appui et s'adapte à tout type de concurrent jeune ou adulte.

Avantageusement, le capteur de force est maintenu en contact de l'extrémité arrière de la barre centrale par un élément fileté vissé dans un filetage d'un bloc arrière de la portion fixe du dispositif. Grâce à cet élément fileté, une précontrainte de la structure en forme de H au repos peut être appliquée par l'intermédiaire du capteur de force. Ceci permet de mieux linéariser la mesure de la force appliquée sur le plot d'appui au moment du départ pour déterminer le temps de réaction du concurrent.

Avantageusement, le dispositif de départ est un dispositif de starting-block utilisé pour une compétition dans le domaine de l'athlétisme. Deux plots d'appui peuvent être prévus et montés de manière ajustable le long d'une barre longitudinale, qui est fixée à l'arrière à la barre centrale de la structure en forme de H. Cette structure en forme de H est fixée par l'intermédiaire des extrémités des lames métalliques à la portion fixe de la base du dispositif de starting-block. Deux barres rigides métalliques de la structure en forme de H sont également prévues pour fixer ladite structure en forme de H à la portion fixe. Ces deux barres rigides externes viennent de matière avec les deux lames et la barre centrale pour ne former qu'une seule pièce.

A cet effet, l'invention concerne également un procédé de mise en action d'un dispositif de départ pour une compétition sportive comprenant les caractéristiques définies dans la revendication indépendante 18.

Une étape particulière du procédé est définie dans la revendication dépendante 19.

Un avantage du procédé de mise en action du dispositif de départ réside dans le fait qu'il permet d'effectuer une mesure précise notamment suite au signalement de départ de la compétition sportive en ne détectant qu'une variation de la force appliquée sur le plot d'appui au moment du départ. Ceci permet grâce à un algorithme mémorisé dans le circuit électronique de traitement, de détecter le début de la réaction du coureur en particulier dès le signalement du départ de la compétition. Le temps de réaction au moment du départ ne dépend donc plus d'un seuil de force déterminé, mais uniquement de la variation de la force sur le plot d'appui détecté par le capteur de force. Le capteur de force relié au circuit électronique peut également être en mesure de fournir une information relative à un faux départ un laps de temps avant le signalement fourni par le pistolet électronique.

Les buts, avantages et caractéristiques du dispositif de départ d'une compétition sportive selon l'invention apparaîtront mieux dans la description suivante d'au moins une forme d'exécution non limitative illustrée par les dessins sur lesquels :
la figure 1 représente une vue tridimensionnelle légèrement en éclaté d'un dispositif de départ sous la forme d'un dispositif de starting-block selon l'invention,
la figure 2a représente une vue partielle de dessus d'une première forme d'exécution au niveau de la base du dispositif de starting-block avec un capteur de détection selon l'invention,
la figure 2b représente une vue partielle de dessus d'une seconde forme d'exécution au niveau de la base du dispositif de starting-block avec deux capteurs de détection en parallèle selon l'invention, et
la figure 2c représente une vue partielle de dessus d'une troisième forme d'exécution au niveau de la base du dispositif de starting-block avec deux capteurs de détection en série selon l'invention.

Dans la description suivante, tous les éléments du dispositif de départ, qui sont bien connus de l'homme du métier dans ce domaine technique, ne seront relatés que de manière simplifiée. Il est à noter qu'il ne sera décrit qu'un dispositif de départ sous la forme d'un dispositif de starting-block pour une compétition d'athlétisme. Cependant ce dispositif de départ peut aussi être une plateforme de départ en natation ou dans une autre compétition sportive, où il est nécessaire de déterminer le temps de réaction du compétiteur pour détecter notamment tout faux départ.

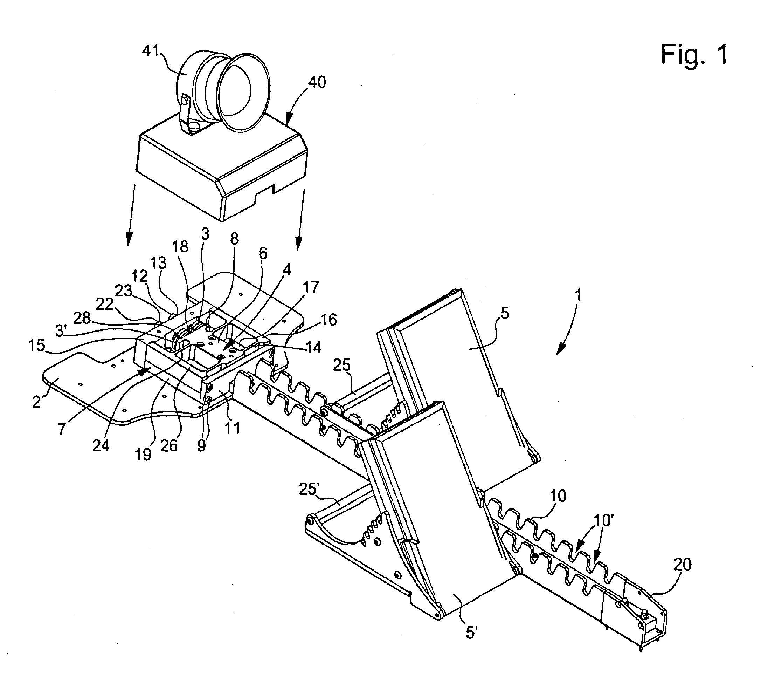

La figure 1 montre une vue tridimensionnelle de tous les éléments essentiels du dispositif de départ, qui est un dispositif de starting-block 1. Le dispositif de starting-block 1 comprend principalement une base 2, qui comprend une plaque en position arrière avec des éléments d'accrochage sous la plaque pour maintenir fixe le dispositif sur une surface de compétition, telle qu'une piste d'athlétisme. La plaque peut être réalisée en matériau métallique, tel qu'en aluminium par exemple du type EN AW-6060. Le dispositif comprend encore au moins un capteur de détection 3, qui est relié à un circuit électronique de traitement non représenté. Ce circuit électronique peut être composé d'une carte à circuit imprimé avec plusieurs composants électroniques, et disposé sous un capot 40 à monter sur la base. Des connecteurs peuvent aussi être prévus à l'arrière du capot non représentés pour relier le circuit électronique à une station de base pour l'affichage des informations fournies par ledit circuit électronique. Un avertisseur sonore 41 ou un indicateur lumineux peut également être monté sur le capot pour signaler un faux départ. Le capteur de détection 3, qui est de préférence un capteur de force, est maintenu fixe sur une portion fixe 7 du dispositif. Le dispositif comprend également au moins un plot d'appui 5 pour au moins un pied du concurrent, qui est relié à la base 2 notamment par l'intermédiaire d'une barre longitudinale 10.

Lors du départ d'une course, le plot d'appui est poussé en direction de la base 2, ce qui permet d'activer le capteur de détection pour déterminer un temps de réaction du compétiteur lors du départ de la compétition. Pour ce faire, le plot d'appui est relié à une structure en forme de H 4 par l'intermédiaire de la barre longitudinale 10. Cette structure en forme de H comprend deux lames 14, 24 espacées et flexibles dans une direction déterminée. Les extrémités des deux lames sont rigidement reliées à la portion fixe 7 du dispositif, alors qu'une barre centrale 6 relie dans une position intermédiaire les deux lames. Cette barre centrale 6 est de préférence reliée à la barre longitudinale 10 de manière à être poussée par l'action d'un pied du compétiteur contre le plot d'appui dans une direction préférentielle par flexion des deux lames pour activer le capteur.

De préférence, le dispositif de starting-block comprend deux plots d'appui 5, 5' pour recevoir chacun un des deux pieds d'un concurrent de la compétition sportive. Ces plots d'appui peuvent être ajustés de manière amovible le long de la barre longitudinale en des positions différentes et sur deux côtés opposés. La surface d'appui de chaque plot, qui peut être réalisée dans un matériau composite, peut aussi être inclinée selon un angle déterminé. Chaque plot d'appui 5, 5' comprend une ou deux tiges 25, 25' reliées à une lamelle intérieure pour être placées respectivement dans des crans 10' d'une des plaques de chaque côté de la barre longitudinale 10. Cette barre longitudinale 10 est fixée à une extrémité arrière, à la barre centrale 6 de la structure en forme de H 4 par exemple au moyen de vis, et à une extrémité avant à une portion d'extrémité 20, qui est maintenue fixe sur la surface de compétition comme la base arrière 2. La barre longitudinale 10 est montée à la portion d'extrémité en étant libre de se déplacer dans une direction longitudinale. Pour ce faire, il peut être prévu une ou deux goupilles de l'extrémité avant de la barre longitudinale coulissant dans deux rainures intérieures de la portion d'extrémité.

La portion fixe 7, à laquelle sont fixées les extrémités des lames espacées 14, 24 de la structure en forme de H 4, est composée de deux barres métalliques de support 17, 19. Ces deux barres métalliques de support sont fixées parallèlement sur la plaque de base 2 par exemple au moyen de vis non représentées. La portion fixe comprend encore un bloc avant 11 et un bloc arrière 15, qui sont également réalisés dans un matériau métallique. Les blocs avant et arrière sont fixés de manière amovible aux deux extrémités des deux barres métalliques de support pour former un cadre. Les blocs avant et arrière sont fixés par exemple au moyen de vis 9 traversant des ouvertures cylindriques des blocs et étant vissées dans des filetages réalisés dans les barres de support. Cependant, les blocs avant et arrière peuvent également être fixés par soudure, brasure ou collage aux extrémités des barres métalliques de support. Une ouverture est prévue dans le bloc avant 11 pour le passage de la barre longitudinale 10 fixée à la barre centrale 6 de la structure en forme de H 4. Le métal utilisé pour la portion fixe 7, ainsi que pour la base 2, la structure en forme de H 4, les plots d'appui 5, 5' et la barre longitudinale 10 peut être un métal léger, tel que l'aluminium par exemple du type EN AW-6060. Cependant d'autres types de métaux peuvent aussi convenir pour la réalisation du dispositif de starting-block 1.

La structure sous forme de H 4 comprend encore une première barre rigide externe 16 fixée aux deux premières extrémités des deux lames 14, 24 et une seconde barre rigide externe 26 fixée aux deux secondes extrémités des deux lames. Comme la structure en forme de H 4 peut être réalisée en matériau métallique, par exemple en aluminium, les deux barres rigides externes peuvent venir de matière avec les lames 14, 24 et la barre centrale 6 de manière à ne former qu'une seule pièce. La structure en forme de H est donc fixée à la portion fixe par l'intermédiaire des deux barres rigides externes. Ces deux barres rigides externes 16 et 26 sont disposées parallèles et sur les barres métalliques de support 17, 19, afin d'être fixées aux blocs avant 11 et arrière 15 de la portion fixe 7 au moyen des vis 9. Bien entendu, les barres rigides externes peuvent aussi être fixées à la portion fixe par soudure, brasure ou collage.

Il est à noter que la structure en forme de H réalisée par exemple en aluminium est dimensionnée de telle manière à permettre la flexion des lames 14, 24 dans la direction longitudinale du mouvement de la barre longitudinale 10. La course de la barre centrale 6 de la structure en forme de H lors de la force appliquée contre les plots d'appui par un concurrent peut aller jusqu'à 50 µm contre le ou les capteurs de force 3, 3'. A titre d'exemple non limitatif, la longueur des barres rigides externes 16, 26 peut être de l'ordre de 106 mm, et leur largeur de l'ordre de 12 mm. La longueur de la barre centrale 6 peut être de l'ordre de 85 mm avec une extrémité avant au même niveau ou légèrement décalée par rapport aux extrémités avant des barres rigides externes pour prendre appui contre le bloc avant de la portion fixe 7. La largeur intermédiaire de la barre centrale 6 peut être de l'ordre de 39 mm, et un plan ou plaque d'appui 8 pour un ou deux capteurs 3, 3' est réalisé à l'extrémité arrière avec une largeur s'étendant jusqu'à 65 mm et une épaisseur de l'ordre de 6 mm dans la direction longitudinale. La hauteur ou épaisseur dans la direction verticale de toutes les parties de la structure en forme de H peut être de l'ordre de 25 mm. Les lames flexibles 14, 24 sont distantes l'une de l'autre d'environ 54 mm et ont chacune une épaisseur pour assurer leur flexion de l'ordre de 4 mm. La longueur des lames flexibles peut être de l'ordre de 120 mm avec la barre centrale 6 fixée dans la partie intermédiaire de chaque lame.

Le bloc arrière 15 comprend un ou deux éléments filetés 12, 22, qui peuvent être vissés chacun dans un filetage traversant respectif 18, 28 à travers le bloc arrière 15, de manière à venir en contact d'une partie arrière d'un ou deux capteurs de force 3, 3'. Chaque filetage traversant peut être de diamètre de l'ordre de 10 mm, et de longueur de l'ordre de 15 à 20 mm par exemple. La partie avant de chaque capteur 3, 3' s'appuie sur le plan ou plaque d'appui de l'extrémité arrière 8 de la barre centrale 6. Le ou les capteurs de force 3, 3' peuvent par l'intermédiaire des éléments filetés être poussés contre le plan ou plaque d'appui 8, afin notamment de pré-contraindre la structure en forme de H 4. Ceci permet de mieux linéariser la réponse du ou des capteurs reliés au circuit électronique de traitement.

Chaque élément fileté 12, 22 comprend une partie filetée d'une longueur suffisante pour dépasser des deux côtés du bloc arrière, afin d'être facilement vissée dans le filetage correspondant 18, 28 du bloc arrière 15. Une tige de chaque élément fileté est disposée dans le prolongement de la partie filetée, afin de venir en contact du ou des capteurs 3, 3'. Il peut encore être prévu autour de la tige, une bague en cuivre-molybdène 30, 30' pour être en appui contre un des capteurs respectifs, afin d'assurer un amortissement lors de la précontrainte de la structure en forme de H 4. Une fois que le réglage de la précontrainte a été effectué au moyen du ou des éléments filetés 12, 22, un écrou 13, 23 par élément fileté peut être vissé sur la partie filetée pour venir en contact du côté extérieur du bloc arrière 15 pour bloquer chaque élément fileté.

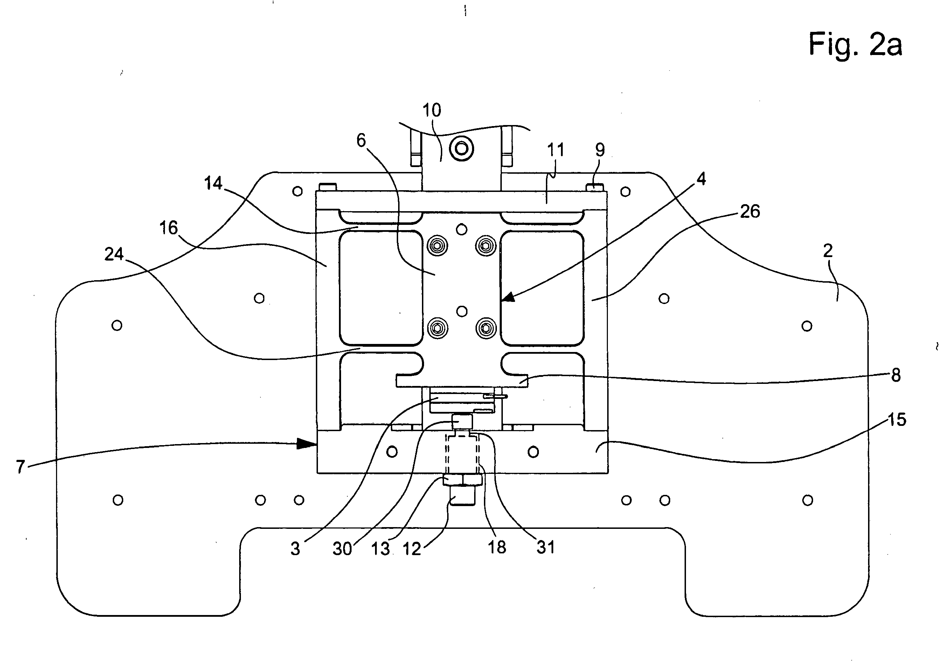

Différentes formes d'exécution sont présentées aux figures 2a à 2c au niveau de la base arrière 2 du dispositif de starting-block 1, où se trouve la structure en forme de H 4. Ces différentes formes d'exécution concernent spécifiquement l'utilisation d'un ou deux capteurs de détection 3, 3' pour déterminer le temps de réaction au moment du départ en liaison avec le circuit électronique non représenté. L'emploi de deux capteurs peut être avantageux de manière à mesurer un temps de réaction au départ d'un concurrent, en s'assurant de tout défaut éventuel de l'un ou l'autre capteur. Comme toutes les autres parties du dispositif de starting-block ont déjà été décrites en référence à la figure 1, il ne sera pas répété la description de chacune de ces parties par simplification. Dans ces figures 2a à 2c, les mêmes signes de référence sont utilisés pour représenter des parties identiques à celles décrites en référence à la figure 1.

A la figure 2a, il est représenté une première forme d'exécution au niveau de la base arrière 2 du dispositif de starting-block 1. Un unique capteur de détection, tel qu'un capteur de force 3 est avantageusement utilisé. Comme expliqué précédemment, ce capteur de force 3 est poussé contre le plan d'appui 8 de l'extrémité arrière de la barre centrale 6 de la structure en forme de H 4 par la tige 31 et la bague 30 de l'élément fileté 12. Une précontrainte de la structure en forme de H peut ainsi être réglée pour s'assurer d'une mesure précise et linéaire du temps de réaction suite à la force appliquée par le concurrent sur les plots d'appui au moment du départ de la course.

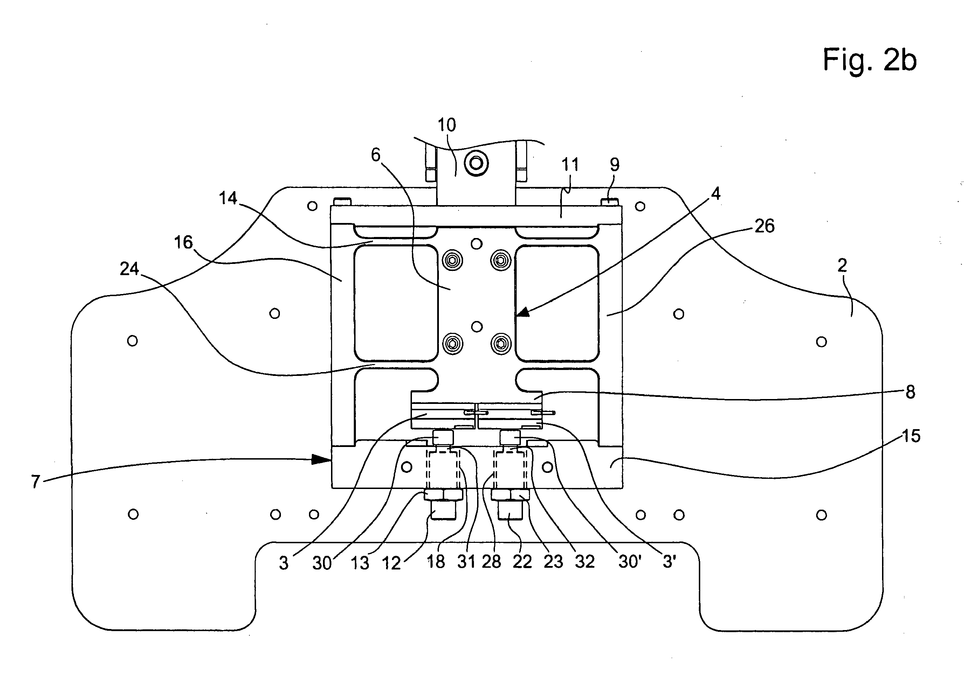

A la figure 2b, il est représenté une seconde forme d'exécution au niveau de la base arrière 2 du dispositif de starting-block 1. Dans ce cas, deux capteurs de force en parallèle 3, 3' sont utilisés. Les deux capteurs de force sont maintenus en appui contre le plan d'appui de l'extrémité arrière 8 de la barre centrale 6 de la structure en forme de H 4. Deux éléments filetés 12, 22 sont donc utilisés pour pousser par l'intermédiaire des tiges 31, 32 et des bagues 30, 30', lesdits capteurs contre ce plan d'appui 8 et afin de pré-contraindre la structure en forme de H pour linéariser de manière similaire la mesure du temps de réaction. Même si cette seconde forme d'exécution présente l'avantage par rapport à la première forme d'exécution de s'assurer de tout défaut éventuel de l'un ou l'autre capteur, la force mesurée par chaque capteur est divisée par deux. De ce fait, cela réduit la précision de la mesure.

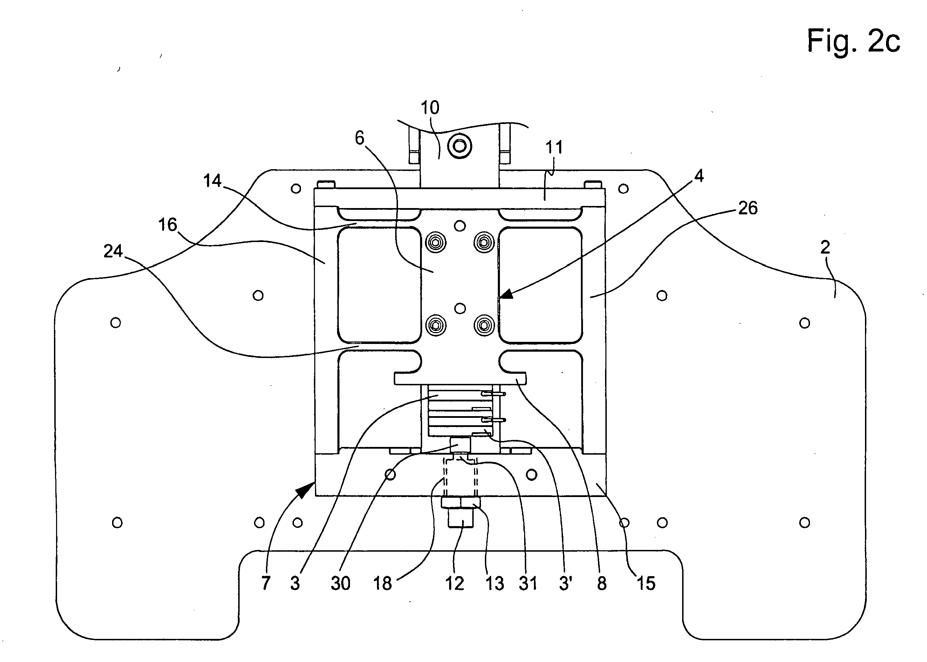

Finalement à la figure 2c, il est représenté une troisième forme d'exécution au niveau de la base arrière 2 du dispositif de starting-block 1. Dans cette troisième forme d'exécution, il est utilisé deux capteurs de force 3, 3' montés en série entre le plan d'appui 8 de la barre centrale 6 et la tige 31 de l'élément fileté 12. Cet élément fileté 12 peut être vissé dans le filetage 18 afin de pousser par l'intermédiaire de la tige 31 et la bague 30, les deux capteurs vers le plan d'appui et effectuer une précontrainte de la structure en forme de H pour linéariser la mesure de la force pour déterminer le temps de réaction au moment du départ de la course.

Lors d'une compétition sportive dans le domaine de l'athlétisme, plusieurs dispositifs de starting-blocks sont montés en général sur la piste en étant reliés chacun par câble ou sans fil à une station de base. Chaque dispositif de starting-block est muni d'au moins un capteur de détection, qui est un capteur de force, relié à un circuit électronique de traitement, afin de déterminer un temps de réaction au moment du départ de la course. Il doit être prévu également de détecter tout faux départ un laps de temps (100 ms) précédent le signalement du départ par un pistolet électronique. Pour ce faire, il doit être tenu compte de toute mesure de force du capteur dans ce laps de temps, ainsi qu'après le signalement de départ. Avec le dispositif de starting-block selon l'invention, il est possible d'abaisser le temps minimum limite pour déterminer un éventuel faux départ suite au signalement du départ de la course. Normalement dans l'état de la technique, ce temps minimum limite est fixé à 100 ms suite au signalement de départ. Dans le cas actuel, ce temps minimum limite peut être réduit sur la base du temps de réaction physiologique réel du corps humain.

La mesure du temps de réaction lors d'un départ d'une course est précisément effectuée avec un faible déplacement de la plaque d'appui à l'extrémité arrière de la barre centrale de la structure en forme de H, afin de déterminer des faux départs. Une courbe de mesure de la force appliquée sur le starting-block dans le temps peut être également déterminée par l'intermédiaire d'une unité à processeur du circuit électronique et affichée sur un écran d'affichage à l'extérieur du dispositif de starting-block.

Pour déterminer ce temps de réaction précisément avec le dispositif de starting-block par une force appliquée sur le ou les plots d'appui, il est mesuré par l'intermédiaire du capteur de force relié au circuit électronique la variation de la force notamment suite au signalement du départ par le pistolet électronique. Par rapport à l'état de la technique où la détection se faisait pour une force mesurée supérieure à un seuil de l'ordre de 28 kg force, maintenant ce n'est que la variation de la force sur le plot d'appui qui est détectée par le capteur pour déterminer le temps de réaction. Cette mesure de la variation de la force est prise en compte déjà un laps de temps (100 ms) précédent le signalement de départ, et le seuil temporel limite pour détecter tout faux départ suite au signalement de départ peut être réduit par rapport au temps minimum limite de l'état de la technique. Cela procure plusieurs avantages dont celui d'être indépendant de la valeur propre de la force à appliquer sur les plots d'appui pour déterminer ce temps de réaction. Il n'est constaté pratiquement aucune différence entre un jeune et un adulte plus puissant pour déterminer le temps de réaction au départ de la compétition sportive.

A partir de la description qui vient d'être faite, plusieurs variantes du dispositif de départ pour un concurrent dans une compétition sportive peuvent être conçues par l'homme du métier sans sortir du cadre de l'invention définie par les revendications. Le dispositif de départ peut être une plateforme de natation avec la barre centrale de la structure en forme de H directement liée à la surface d'appui du nageur et en contact d'un autre côté au capteur de force sur la portion fixe de la base. La barre centrale de la structure en forme de H peut être reliée directement sous une surface d'appui du plot d'appui avec le capteur de force maintenu sur la portion fixe en contact d'une extrémité arrière de la barre centrale. Chaque capteur de détection peut être un accéléromètre ou un capteur de lumière ou un autre type de capteur.

## Revendications

1. Dispositif (1) de départ pour un concurrent d'une compétition sportive, le dispositif comprenant au moins une base (2) pour maintenir fixe le dispositif sur une surface de compétition, un capteur de détection (3) relié à un circuit électronique de traitement, et un plot d'appui (5) pour au moins un pied, qui est relié à la base et qui permet d'activer le capteur de détection pour déterminer un temps de réaction du compétiteur au moment du départ de la compétition,
**caractérisé en ce que** le plot d'appui (5) est relié à une structure en forme de H (4), qui comprend deux lames (14, 24) espacées, dont les extrémités des deux lames sont rigidement reliées à une portion fixe (7) du dispositif, alors qu'une barre centrale (6) reliant les deux lames peut être poussée dans une direction préférentielle par flexion des deux lames pour activer le capteur lors d'une force appliquée contre le plot d'appui par au moins un pied d'un compétiteur.

2. Dispositif (1) selon la revendication 1, **caractérisé en ce que** la barre centrale (6) vient de matière avec les deux lames (14, 24) de la structure en forme de H, qui sont réalisées dans un matériau métallique.

3. Dispositif (1) selon la revendication 2, **caractérisé en ce que** les extrémités des deux lames (14, 24) sont rigidement reliées à la portion fixe (7) du dispositif par l'intermédiaire de deux barres rigides externes (16, 26) fixées aux extrémités des deux lames et venant de matière avec les deux lames et la barre centrale (6).

4. Dispositif (1) selon la revendication 1, **caractérisé en ce que** le capteur de détection, qui est maintenu sur la portion fixe (7), est un capteur de force (3), sur lequel s'appuie une extrémité arrière (8) de la barre centrale (6) de la structure en forme de H (4).

5. Dispositif (1) selon la revendication 4, **caractérisé en ce qu'**il comprend deux capteurs de force (3, 3') montés en série avec un des capteurs en contact de l'extrémité arrière de la barre centrale (6).

6. Dispositif (1) selon la revendication 4, **caractérisé en ce qu'**il comprend deux capteurs de force (3, 3') montés en parallèle avec l'extrémité en forme de plaque plane (8) de la barre centrale (6) en appui sur chaque capteur de force.

7. Dispositif (1) selon la revendication 1, **caractérisé en ce que** la barre centrale (6) de la structure en forme de H (4) est reliée sous une surface d'appui du plot d'appui (5), et **en ce que** le capteur de détection (3) est maintenu sur la portion fixe (7) en regard d'une extrémité arrière (8) de la barre centrale (6).

8. Dispositif (1) selon la revendication 1, **caractérisé en ce que** le dispositif de départ est un dispositif de starting-block, qui comprend une barre longitudinale (10) reliée à une extrémité arrière à la base (2) maintenue fixe sur une surface de compétition et à une extrémité avant à une portion d'extrémité (20) maintenue fixe sur ladite surface de compétition, et **en ce qu'**il comprend un ou deux plots d'appui (5, 5') montés de manière amovible et ajustables le long de la barre longitudinale.

9. Dispositif (1) selon la revendication 8, **caractérisé en ce que** les extrémités des deux lames (14, 24) de la structure en forme de H (4) sont fixées rigidement sur une portion fixe (7) de la base (2), et **en ce que** l'extrémité arrière de la barre longitudinale (10) est fixée à la barre centrale (6) de la structure en forme de H.

10. Dispositif (1) selon la revendication 8, **caractérisé en ce que** l'extrémité avant de la barre longitudinale (10) est reliée à la portion d'extrémité (20) en étant libre de mouvement dans une direction longitudinale.

11. Dispositif (1) selon la revendication 9, **caractérisé en ce que** la portion fixe (7) de la base (2) est composée de deux barres métalliques de support (17, 19) fixées parallèlement sur une plaque de base (2), et un bloc avant (11) et un bloc arrière (15), qui sont fixés de manière amovible aux deux extrémités des deux barres métalliques de support pour former un cadre.

12. Dispositif (1) selon la revendication 11, **caractérisé en ce que** les extrémités des deux lames (14, 24) de la structure en forme de H (4) sont reliées à deux barres rigides externes (16, 26), qui viennent de matière avec les lames métalliques et la barre centrale (6) pour former une seule pièce, et **en ce que** les deux barres rigides sont fixées aux blocs avant (11) et arrière (15) de la portion fixe (7) en étant posées sur les deux barres de support (17, 19) de la portion fixe.

13. Dispositif (1) selon la revendication 12, **caractérisé en ce que** les blocs avant (11) et arrière (15) de la portion fixe (7) sont fixés aux barres métalliques de support (17, 19) au moyen de vis (9).

14. Dispositif (1) selon la revendication 11, **caractérisé en ce que** le bloc arrière (15) comprend un filetage (18) pour recevoir un élément fileté (12), qui peut être vissé dans le filetage pour venir en contact du capteur de force (3) ou des deux capteurs de force (3, 3') montés en série, et le ou les pousser contre l'extrémité arrière (8) de la barre centrale (6), afin de pré-contraindre la structure en forme de H (4) pour linéariser la réponse du ou des capteurs.

15. Dispositif (1) selon la revendication 11, **caractérisé en ce qu'**il comprend deux capteurs de force (3, 3') placés en parallèle et en contact d'un plan d'appui (8) de l'extrémité arrière de la barre centrale (6), **en ce que** le bloc arrière (15) comprend deux filetages (18, 28) pour recevoir chacun un élément fileté (12, 22), qui peut être vissé dans le filetage correspondant pour venir en contact du capteur de force correspondant et le pousser contre le plan d'appui de l'extrémité arrière de la barre centrale, afin de pré-contraindre la structure en forme de H (4) pour linéariser la réponse des capteurs.

16. Dispositif (1) selon la revendication 14, **caractérisé en ce que** l'élément fileté (12) comprend une partie filetée pour être vissée dans le filetage (18) du bloc arrière (15) et une tige dans le prolongement de la partie filetée, qui vient en contact du ou des capteurs (3, 3'), et **en ce qu'**une bague en cuivre-molybdène (30) est disposée sur la tige pour être en appui contre un des capteurs, afin d'assurer un amortissement lors de la précontrainte de la structure en forme de H.

17. Dispositif (1) selon l'une des revendications 15 et 16, **caractérisé en ce qu'**un écrou (13, 23) est prévu pour chaque élément fileté (12, 22) de manière à être vissé sur l'élément fileté correspondant pour venir en contact avec un côté extérieur du bloc arrière (15) pour bloquer chaque élément fileté après réglage de la précontrainte de la structure en forme de H (4).

18. Procédé de mise en action d'un dispositif (1) de départ selon l'une des revendications précédentes, pour déterminer un temps de réaction d'un concurrent depuis le plot d'appui du dispositif lors du départ de la compétition sportive, le procédé comprenant les étapes consistant à :
- transmettre un signal de départ au dispositif de starting-block pour signaler l'instant initial du départ de la compétition,
- mesurer par le capteur de détection relié au circuit électronique de traitement, la variation de la force appliquée par le concurrent sur le plot d'appui au moment du départ par le capteur de détection, pour déterminer un temps de réaction à comparer à un seuil temporel limite déterminé par rapport à l'instant du départ pour contrôler si le temps de réaction se trouve au-dessus du seuil temporel ou au-dessous signalant un faux départ.

19. Procédé selon la revendication 18, **caractérisé en ce que** le capteur de détection est un capteur de force (3), qui est mis en fonction un laps de temps avant le signalement du départ de la compétition sportive pour déterminer tout faux départ suite à la mesure de la variation de la force appliquée sur le plot d'appui.

## Patentansprüche

1. Starteinrichtung für einen Wettkämpfer eines Sportwettkampfs, wobei die Einrichtung zumindest eine Basis (2) zum Fixieren der Einrichtung auf einer Wettkampffläche, einen mit einer elektrischen Verarbeitungsschaltung verbundenen Detektionssensor (3) und einen Abstützstempel (5) für zumindest einen Fuß aufweist, welcher mit der Basis verbunden ist und welcher es erlaubt, den Detektionssensor zur Bestimmung einer Reaktionszeit des Wettkämpfers im Augenblick des Starts des Wettkampfs zu aktivieren,
**dadurch gekennzeichnet, dass** der Abstützstempel (5) mit einer H-förmigen Struktur (4) verbunden ist, die zwei beabstandete Stege (14, 24) aufweist, deren Enden fest mit einem fixen Abschnitt (7) der Einrichtung verbunden sind, während ein zentraler, die beiden Stege verbindender Stab (6) bevorzugt durch Biegung der beiden Stege in eine Richtung gedrückt werden kann, um den Sensor zu aktivieren, wenn eine Kraft über zumindest einen Fuß eines Wettkämpfers gegen den Abstützstempel anliegt.

2. Einrichtung (1) nach Anspruch 1, **dadurch gekennzeichnet, dass** der zentrale Stab (6) einstückig mit den Stegen (14, 24) in H-förmiger Struktur ausgebildet ist, welche von einem metallischen Material gebildet sind.

3. Einrichtung (1) nach Anspruch 2, **dadurch gekennzeichnet, dass** die Enden der beiden Stege (14, 24) fest an dem fixen Abschnitt (7) der Einrichtung mittels zweier steifer externer Stäbe (16, 26) befestigt sind, die an den Enden der zwei Stege fixiert und einstückig mit den zwei Stegen des zentralen Stabs (6) ausgebildet sind.

4. Einrichtung (1) nach Anspruch 1, **dadurch gekennzeichnet, dass** der Detektionssensor, welcher auf dem fixen Abschnitt (7) gehalten ist, ein Kraftsensor (3) ist, auf welchen sich ein hinteres Ende (8) des zentralen Stabs (6) der H-förmigen Struktur (4) abstützt.

5. Einrichtung (1) nach Anspruch 4, **dadurch gekennzeichnet, dass** sie zwei Kraftsensoren (3, 3') aufweist, die in Serie montiert sind, wobei einer der Sensoren mit dem hinteren Ende des zentralen Stabs (6) in Kontakt ist.

6. Einrichtung (1) nach Anspruch 4, **dadurch gekennzeichnet, dass** sie zwei Kraftsensoren (3, 3') aufweist, die parallel zu dem ebenen plattenförmigen Ende (8) des zentralen Stabs (6) in Abstützung auf jedem Kraftsensor montiert sind.

7. Einrichtung (1) nach Anspruch 1, **dadurch gekennzeichnet, dass** der zentrale Stab (6) in H-förmiger Struktur (4) unter einer Abstützfläche des Abstützstempels (5) angebunden ist und wobei der Detektionssensor (3) auf dem fixen Abschnitt (7) in Bezug auf ein hinteres Ende (8) des zentralen Stabs (6) gehalten ist.

8. Einrichtung (1) nach Anspruch 1, **dadurch gekennzeichnet, dass** die Starteinrichtung eine Startblockeinrichtung ist, die einen longitudinalen Stab (10) aufweist, der mit einem hinteren Ende an der auf der Wettkampffläche gehaltenen Basis (2) und mit einem vorderen Ende an einem Endabschnitt (20) angebunden ist, welcher auf der Wettkampffläche fixiert ist und welcher ein oder zwei Abstützstempel (5, 5') aufweist, die abnehmbar und justierbar entlang dem longitudinalen Stab angeordnet sind.

9. Einrichtung (1) nach Anspruch 8, **dadurch gekennzeichnet, dass** die Enden der Stege (14, 24) der H-förmigen Struktur (4) fest auf dem fixen Abschnitt (7) der Basis (2) fixiert sind und wobei der hintere Abschnitt des longitudinalen Stabs (10) an dem zentralen Stab (6) der H-förmigen Struktur fixiert ist.

10. Einrichtung (1) nach Anspruch 8, **dadurch gekennzeichnet, dass** das vordere Ende des longitudinalen Stabs (10) mit dem Endabschnitt (20) verbunden und in einer longitudinalen Richtung frei beweglich ist.

11. Einrichtung (1) nach Anspruch 9, **dadurch gekennzeichnet, dass** der fixe Abschnitt (7) der Basis (2) von zwei parallel auf einem Basisschild (2) fixierten metallischen Stützstegen (17, 19) und von einem vorderen Block (11) und von einem hinteren Block (15) gebildet ist, die abnehmbar an den beiden Enden der beiden metallischen Stützstegen fixiert sind, um einen Rahmen zu bilden.

12. Einrichtung (1) nach Anspruch 11, **dadurch gekennzeichnet, dass** die Enden der beiden Stege (14, 24) der H-förmigen Struktur (4) mit zwei externen steifen Stäben (16, 26) verbunden sind, die einstückig mit den metallischen Stegen und dem zentralen Steg (6) ausgebildet sind, um ein einziges Stück zu bilden und wobei die zwei starren Stäbe an den vorderen und hinteren Blöcken (11, 15) des fixen Abschnitts (7) fixiert sind, in dem sie auf den beiden Stützstegen (17, 19) des fixen Abschnitts liegen.

13. Einrichtung (1) nach Anspruch 12, **dadurch gekennzeichnet, dass** die vorderen und hinteren Blöcke (11, 15) des fixen Abschnitts (7) auf den metallischen Stützstegen (17, 19) mittels Schraubmitteln (9) fixiert sind.

14. Einrichtung (1) nach Anspruch 11, **dadurch gekennzeichnet, dass** der hintere Block (15) eine Gewindebohrung (18) zur Aufnahme eines Gewindeelements (12) aufweist, welches in die Gewindebohrung einschraubbar ist, um mit dem Kraftsensor (3) oder mit den beiden in Reihe geschalteten Kraftsensoren (3, 3') in Kontakt zu gelangen und diesen oder diese gegen das hintere Ende (8) des zentralen Stabs (6) zu drücken, um die H-förmige Struktur (4) zur Linearisierung der Antwort des oder der Sensoren vorzuspannen.

15. Einrichtung (1) nach Anspruch 11, **dadurch gekennzeichnet, dass** sie zwei parallel platzierte Kraftsensoren (3, 3') aufweist, die mit einer Abstützfläche (8) des hinteren Endes des zentralen Stabs (6) in Kontakt sind und wobei der hintere Block (15) zwei Gewindebohrungen (18, 28), jede zur Aufnahme eines Gewindeelements (12, 22) aufweist, die in die entsprechende Gewindebohrung einschraubbar sind, um mit den entsprechenden Kraftsensoren in Kontakt zu gelangen und diesen gegen die Abstützfläche des hinteren Endes des zentralen Stabs zu drücken, um die H-förmige Struktur (4) zur Linearisierung der Antwort der Sensoren vorzuspannen.

16. Einrichtung (1) nach Anspruch 14, **dadurch gekennzeichnet, dass** das Gewindeelement (12) einen Gewindeabschnitt zum Einschrauben in die Gewindebohrung (18) des hinteren Blocks (15) und einen Schaft in Verlängerung des Gewindeabschnitts aufweist, welcher mit dem oder mit den Sensoren (3, 3') in Kontakt gelangt und wobei ein Ring aus Kupfer-Molybdän (30) auf dem Schaft angeordnet ist, um in Abstützung gegen die Sensoren zu sein, um eine Amortisierung aufgrund der Vorspannung der H-förmigen Struktur sicherzustellen.

17. Einrichtung (1) nach einem der Ansprüche 15 und 16, **dadurch gekennzeichnet, dass** eine Mutter (13, 23) für jedes Gewindeelement (12, 22) derart vorgesehen ist, um auf das korrespondierende Gewindeelement aufgeschraubt zu werden, um mit der Außenseite des hinteren Blocks (15) in Kontakt zu gelangen, um jedes Gewindeelement nach Einstellung der Vorspannung der H-förmigen Struktur (4) zu blockieren.

18. Verfahren zur Inbetriebnahme einer Starteinrichtung (1) nach einem der vorhergehenden Ansprüche zur Bestimmung einer Reaktionszeit eines Wettkampfes vom Abstützstempel der Einrichtung während dem Beginn des Sportwettkampfs, wobei das Verfahren die Schritte aufweist:
- Übermitteln eines Startsignals an die Startblockeinrichtung, um einen initialen Startzeitpunkt des Wettkampfs zu signalisieren,
- Messen der Variation der vom Wettkämpfer im Moment des Starts gegen den Detektionssensor aufgewendeten Kraft mittels dem mit der elektronischen Verarbeitungsschaltung verbundenen Detektionssensor, um eine Reaktionszeit mit einer vorgegebenen zeitlichen Untergrenze im Augenblick des Starts zu vergleichen, um zu kontrollieren, ob sich die Reaktionszeit oberhalb der zeitlichen Untergrenze oder unterhalb befindet, um einen Fehlstart zu signalisieren.

19. Verfahren nach Anspruch 18, **dadurch gekennzeichnet, dass** der Detektionssensor ein Kraftsensor (3) ist, der um eine Zeitspanne vor dem Startsignal des Sportwettkampfs in Funktion genommen ist, um sämtliche Fehlstarts durch die Messung der Variation der auf den Abstützstempel aufgewendeten Kraft zu bestimmen.

## Claims

1. Starting device (1) for a competitor in a sports competition, the device including at least one base (2) for fixedly holding the device on a competition surface, a detection sensor (3) connected to an electronic processing circuit, and a block (5) for at least one foot, which is connected to the base and which activates the detection sensor to determine the response time of the competitor at the start of the competition,
**characterized in that** the block (5) is connected to an H-shaped structure (4), which includes two spaced apart strips (14, 24), wherein the ends of said two strips are rigidly connected to an immobile portion (7) of the device, while a central bar (6) connecting the two strips can be pushed in a preferred direction via the bending of the two strips to activate the detection sensor when a force is applied against the block by at least one foot of a competitor.

2. Device (1) according to claim 1, **characterized in that** the central bar (6) is integral with the two strips (14, 24) of the H-shaped structure, which are made of a metallic material.

3. Device (1) according to claim 2, **characterized in that** the ends of the two strips (14, 24) are rigidly connected to the immobile portion (7) of the device via two external rigid bars (16, 26) secured to the ends of the two strips and integral with the two strips and the central bar (6).

4. Device (1) according to claim 1, **characterized in that** the detection sensor, which is held on the immobile portion (7), is a force sensor (3), on which a rear end (8) of the central bar (6) of the H-shaped structure (4) abuts.

5. Device (1) according to claim 4, **characterized in that** it includes two force sensors (3, 3') series mounted with one of the sensors in contact with the rear end of the central bar (6).

6. Device (1) according to claim 4, **characterized in that** it includes two force sensors (3, 3') mounted in parallel, with the flat plate shaped end (8) of the central bar (6) abutting on each force sensor.

7. Device (1) according to claim 1, **characterized in that** the central bar (6) of the H-shaped structure (4) is connected underneath a bearing surface of the block (5), and **in that** the detection sensor (3) is held on the immobile portion (7) opposite a rear end (8) of the central bar (6).

8. Device (1) according to claim 1, **characterized in that** the starting device is a starting block device, which includes a longitudinal bar (10) connected at a rear end to the base (2), which is fixedly held on a competition surface and at a front end to an end portion (20), which is fixedly held on said competition surface, and **in that** it includes one or two blocks (5, 5') removably and adjustably mounted along the longitudinal bar.

9. Device (1) according to claim 8, **characterized in that** the ends of the two strips (14, 24) of the H-shaped structure (4) are rigidly fixed to an immobile portion (7) of the base (2), and **in that** the rear end of the longitudinal bar (10) is secured to the central bar (6) of the H-shaped structure.

10. Device (1) according to claim 8, **characterized in that** the front end of the longitudinal bar (10) is connected to the end portion (20) yet is free to move in a longitudinal direction.

11. Device (1) according to claim 9, **characterized in that** the immobile portion (7) of the base (2) is formed of two metallic support bars (17, 19) fixed in parallel to a base plate (2), and a front unit (11) and a rear unit (15), which are removably secured to both ends of the two metallic support bars to form a frame.

12. Device (1) according to claim 11, **characterized in that** the ends of the two strips (14, 24) of the H-shaped structure (4) are connected to two external rigid bars (16, 26) which are integral with the metallic strips and the central bar (6) to form a single piece, and **in that** the two rigid bars are secured to the front (11) and rear (15) units of the immobile portion (7) and placed on the two support bars (17, 19) of the immobile portion.

13. Device (1) according to claim 12, **characterized in that** the front (11) and rear (15) units of the immobile portion (7) are secured to the metallic support bars (17, 19) by means of screws (9).

14. Device (1) according to claim 11, **characterized in that** the rear unit (15) includes a thread (18) for receiving a threaded element (12) which may be screwed into the thread to come into contact with the force sensor (3) or the two force sensors (3, '3') mounted in series, and to push said sensor(s) against the rear end (8) of the central bar (6), so as to prestress the H-shaped structure (4) to linearise the response of the sensor or sensors.

15. Device (1) according to claim 11, **characterized in that** it includes two force sensors (3, 3') placed in parallel and in contact with a base plane (8) of the rear end of the central bar (6), **in that** the rear unit (15) includes two threads (18, 28) each for receiving a threaded element (12, 22), which may be screwed into the corresponding thread to come into contact with the corresponding force sensor and push said sensor against the base plane of the rear end of the central bar, so as to prestress the H-shaped structure (4) to linearise the response of the sensors.

16. Device (1) according to claim 14, **characterized in that** the threaded element (12) includes a threaded portion to be screwed into the thread (18) of the rear unit (15) and a shank in the extension of the threaded portion, which comes into contact with the sensor or sensors (3, 3'), and **in that** a copper-molybdenum ring (30) is arranged on the shank to abut against one of the sensors, so as to ensure damping during the prestressing of the H-shaped structure.

17. Device (1) according to any of claims 15 and 16, **characterized in that** a nut (13, 23) is provided for each threaded element (12, 22), to be screwed onto the corresponding threaded element in order to come into contact with an external side of the rear unit (15) and lock each threaded element after the prestressing of the H-shaped structure (4) has been adjusted.

18. Method for activating a starting device (1) according to any of the proceeding claims, for determining a response time of a competitor from the block of the device at the start of the sports competition, the method including the steps consisting in:
- transmitting a start signal to the starting block device to indicate the initial instant of the start of the competition,
- measuring, via the detection sensor connected to the electronic processing circuit, the variation in force applied by the competitor to the block at the start by the detection sensor, to determine a response time to be compared to a determined threshold time limit relative to the instant of the start so as to check whether the response time is above the time threshold or below, indicating a false start.

19. Method according to claim 18, **characterized in that** the detection sensor is a force sensor (3), which is activated a fraction of time before the start signal of the sports competition to determine any false start following measurement of the variation in force applied to the block
